# FASCICULE DE BREVET EUROPEEN

(11) **EP 1 721 650 B1**
(45) Date de publication et mention de la délivrance du brevet: **16.09.2009**
(21) Numéro de dépôt: 05300366.1
(22) Date de dépôt: 10.05.2005
(51) Int. Cl.: B01D 21/00, B01D 21/02

(54) **Décanteur lamellaire pour le traitement d'un liquide chargé**
Lamellenabscheider zur Behandlung beladener Flüssigkeit
Lamellar clarifier for the treatment of loaded liquid

(43) Date de publication de la demande: 15.11.2006
(73) Titulaire: Hydroconcept, 78190 Trappes (FR)
(72) Inventeur: Morin, Antoine, 78820 La Verrière (FR)
(74) Mandataire: Herrburger, Pierre

(56) Documents cités:
- EP-A- 0 636 396
- DE-A- 4 302 003
- FR-A- 2 834 476
- US-A- 4 957 628
- PATENT ABSTRACTS OF JAPAN vol. 1998, no. 05, 30 avril 1998 (1998-04-30) & JP 10 005505 A (KUBOTA CORP), 13 janvier 1998 (1998-01-13)

## Description

### Domaine de l'invention

La présente invention concerne un décanteur lamellaire pour le traitement d'un liquide chargé selon le préambule de la première revendication.

On connaît déjà un tel décanteur lamellaire par exemple selon le document FR 96 12 702.

Selon le document US 4 957 628 Schulz, on connaît un décanteur lamellaire pour le traitement d'un liquide chargé. Ce décanteur comporte une cuve avec des panneaux constitués par une nappe 8 tenue dans deux tubes latéraux qui en assurent plus ou moins la tension. Ces tubes sont engagés sur des tiges de guidage 55 dont l'extrémité inférieure est logée de manière mobile en translation et en pivotement dans un orifice 56 d'une cornière 40, fixée de chaque côté du bassin. L'extrémité supérieure des tiges est portée par un chariot qui assure à la fois le support de la tige et de la partie correspondante du panneau du décanteur en étant guidée dans un rail horizontal, qui reçoit ainsi la charge de l'ensemble des panneaux de décanteur 8, 55. Les chariots portant l'extrémité supérieure des tiges 55 sont déplacés par l'intermédiaire de deux boucles latérales formées par des chaînes entraînées par un mécanisme d'entraînement 62 installé en surface. Rien n'est dit sur ce mécanisme qui doit néanmoins fournir une puissance très importante pour incliner les panneaux qui représentent nécessairement une masse et un poids très importants qu'il faut déplacer. Les panneaux sont suspendus aux deux rails latéraux 45 qui permettent également le déplacement horizontal des extrémités des tiges de panneaux pour les incliner, l'extrémité inférieure 55 des tiges étant logée en pivotement et en coulissement dans les orifices 56respectifs des deux cornières 40 qui n'assurent aucun support recevant la charge. Cet ensemble mécanique complexe travaille dans un environnement particulièrement hostile pour la mécanique à cause de la présence de particules corrosives et encombrantes du liquide à filtrer aussi est-il sujet à des pannes fréquentes.

Le document JP 10005505 Kubota constitue l'art antérieur le plus proche. Il s'agit d'un bassin de décanteur comportant des plaques inclinables sur lesquelles se déposent les particules du liquide à filtrer. Ces plaques sont montées pivotantes par des pivots prévus à leur extrémité inférieure et logés dans des paliers portés par les deux côtés du bassin.

Les plaques sont reliées et l'ensemble est commandé par les éléments de liaison 8 reliés à une partie de bras 9a, d'un dispositif d'entraînement 9 qui est un vérin ou dispositif d'entraînement de ce type. Il est indiqué dans ce document que ce dispositif peut faire osciller en va et vient, les plaques inclinées 5 pour les débarrasser des matières déposées.

Là encore, il faut que le dispositif 9 exerce un effort très important pour pivoter les plaques 5 autour de leur articulation en partie basse 7.

### But de l'invention

Le but de l'invention est de simplifier le montage et le démontage des plaques dans un tel décanteur, faciliter son exploitation et sa maintenance pour d'éventuelles interventions de remplacement des plaques ou de modifications de l'angle d'inclinaison, et surtout, faciliter les opérations de nettoyage de la surface des plaques.

A cet effet, l'invention concerne un décanteur lamellaire du type défini ci-dessus selon les caractéristiques de la première revendication.

Ce dispositif facilite le montage et le démontage des plaques. En effet, les plaques sont mises en place en position verticale les unes après les autres avec des moyens de manutention réduits étant donné le poids non excessif des plaques prises individuellement. Après l'introduction des plaques dans la cuve du décanteur, celles-ci sont liées les unes aux autres, l'ensemble des plaques étant ensuite relié au contrepoids afin qu'elles puissent pivoter globalement. Le démontage pour changer une plaque abîmée est tout aussi simple. Après désolidarisation des plaques, celles-ci peuvent être repoussées pour conduire la plaque à remplacer vers le sas d'accès à la cuve et procéder à l'échange de la ou des plaques puis réassembler l'ensemble au contrepoids.

Le contrepoids du décanteur facilite la manoeuvre de basculement des plaques pour les faire passer de la position inclinée qui est habituellement la position active, c'est-à-dire celle de la décantation, à la position de nettoyage proche de la position verticale pour faciliter la chute des dépôts de matière encore retenus sur les plaques. En effet, le contrepoids vient équilibrer par son poids propre le poids des lames. L'énergie extérieure requise pour commander le basculement des plaques étant ré duite dans une proportion importante. Ainsi, le basculement ou mouvement d'inclinaison des plaques se fera aisément, que la cuve soit remplie d'eau ou vide.

Afin d'obtenir un équilibre des forces, le contrepoids développe une traction proportionnelle à l'angle d'inclinaison des plaques, la masse du contrepoids variant en fonction de l'angle d'inclinaison des plaques.

Bien que les particules s'agglutinent en formant des dépôts sur les plaques et s'en détachent en forme de lambeaux au fur et à mesure de l'augmentation de leur poids pendant le fonctionnement du décanteur, il est nécessaire de temps à autre de nettoyer systématiquement les plaques pour en détacher les incrustations qui ne s'en détacheraient pas naturellement.

Ce nettoyage peut se faire par jet d'eau, et nécessite l'évacuation de l'eau de la cuve pour y accéder avec l'équipement de nettoyage.

Le nettoyage se fait de préférence avec les plaques en position verticale parce que l'intervalle entre les plaques est alors le plus grand et facilite l'orientation du jet d'eau avec l'équipement de nettoyage. De plus, les parties à détacher tombent plus facilement, et cela que le jet d'eau soit dirigé à partir du dessus, comme dans le cas des décanteurs à contre courant ou, par le côté dans le cas des décanteurs à flux croisé.

Suivant une autre caractéristique avantageuse, le contrepoids est relié aux plaques par une liaison par câble. L'installation de cette transmission d'effort est particulièrement simple.

Suivant une autre caractéristique, le contrepoids est disposé à l'extrémité d'un bras de levier articulé à un support fixé aux parois de l'ouvrage. Ainsi, le moment des forces faisant basculer les lames de la position proche de la verticale à la position inclinée est-il compensé par le moment des forces s'exerçant à l'extrémité du bras de levier du contrepoids.

Suivant une autre caractéristique, le contrepoids est constitué de masses élémentaires reliées les unes aux autres par un câble, une chaîne ou une articulation, l'ensemble venant reposer sur un siège. Ainsi, lorsque les lames basculent en position inclinée, le contrepoids se déplie et la totalité des masses compensent la tension qui s'exerce sur le câble de liaison.

A contrario, lorsque les lames reviennent vers la position verticale, les masses viennent reposer les unes après les autres sur le siège, réduisant ainsi progressivement la masse du contrepoids.

Suivant une autre caractéristique, le contrepoids est installé dans un puits de façon à dégager complètement la cuve dans laquelle sont installées les plaques et ne pas gêner la circulation de l'eau. Selon l'invention, le contrepoids est formé de masses élémentaires, ce qui facilite la mise en place et l'équilibrage du contrepoids, élément par élément, car chaque élément aura une masse permettant sa mise en place sans nécessiter d'engin de manutention.

Enfin, il est intéressant que le contrepoids soit associé à chaque côté de l'ensemble des plaques.

L'actionnement des plaques pour les incliner plus ou moins se fait par un actionneur qui en même temps retient ou bloque l'inclinaison des plaques dans la position choisie.

D'une manière particulièrement intéressante, les pivots des plaques sont installés en partie basse et les liaisons articulées entre les plaques en partie haute. De cette manière toute la surface latérale des plaques est dégagée et permet l'alimentation régulière du liquide par le côté des plaques pour un décanteur à flux croisés.

La liaison entre les plaques est assurée au moyen de biellettes maintenues en place par des vis ou par des goupilles.

Il peut être intéressant de modifier l'écartement des plaques en fonction de l'usage fait du décanteur. Pour cela, le décanteur comporte des rails installés en partie basse munis de réservations réparties notamment à intervalles réguliers, inférieurs à la distance minimale entre deux plaques en position verticale, pour recevoir de manière réglable en écartement les plaques par leu pivot.

Ces rails sont munis de réservation, notamment en forme d'encoches qui reçoivent les axes prévus aux extrémités inférieures des plaques. Si cet écartement des réservations est inférieur à l'écartement minimum des plaques en position verticale, les plaques se suivront à un intervalle de deux ou trois réservations. Il sera ainsi possible de modifier l'écartement des plaques dans la cuve.

### Dessins

La présente invention sera décrite ci-après de manière plus détaillée à l'aide d'exemples de réalisation représentés dans les dessins annexés dans lesquels :
- la figure 1 est un schéma d'un décanteur lamellaire selon l'invention,
- la figure 2 est une vue de côté d'un décanteur lamellaire à flux croisés,

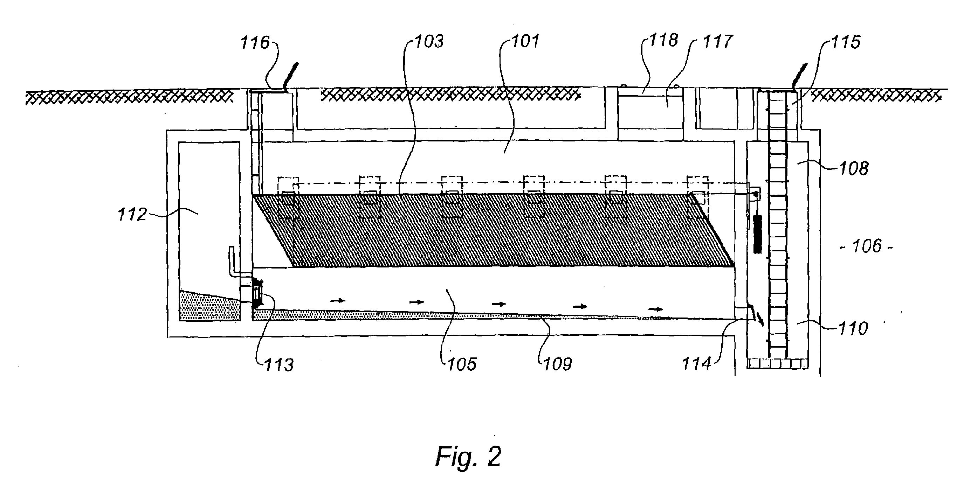

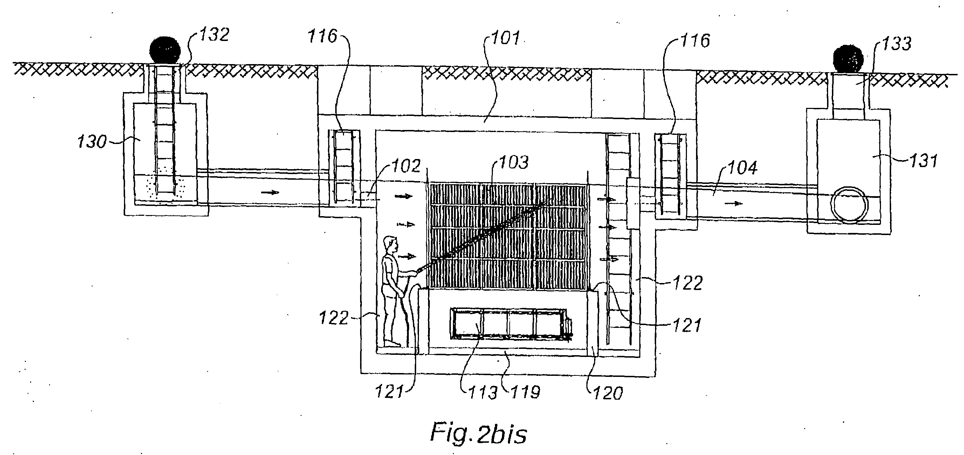

- la figure 2bis est une vue en section du décanteur de la figure 2,

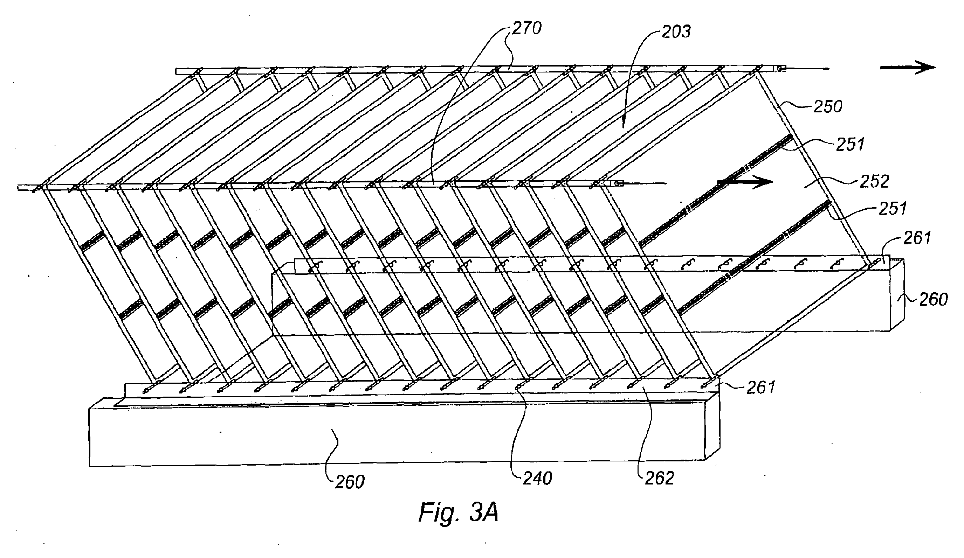

- la figure 3A montre un mode de réalisation d'un ensemble de plaques en position inclinée.

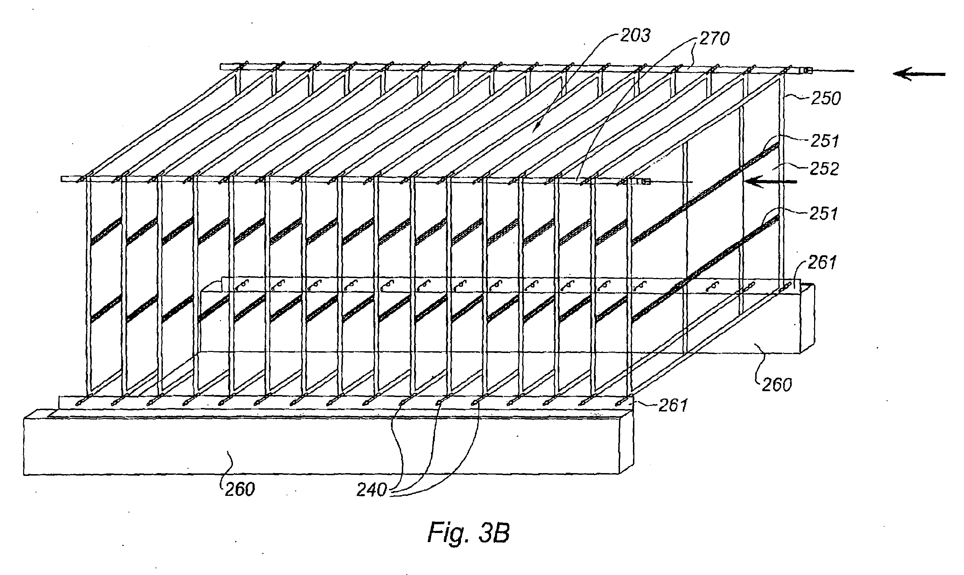

- la figure 3B montre l'ensemble de plaques du décanteur en position verticale,

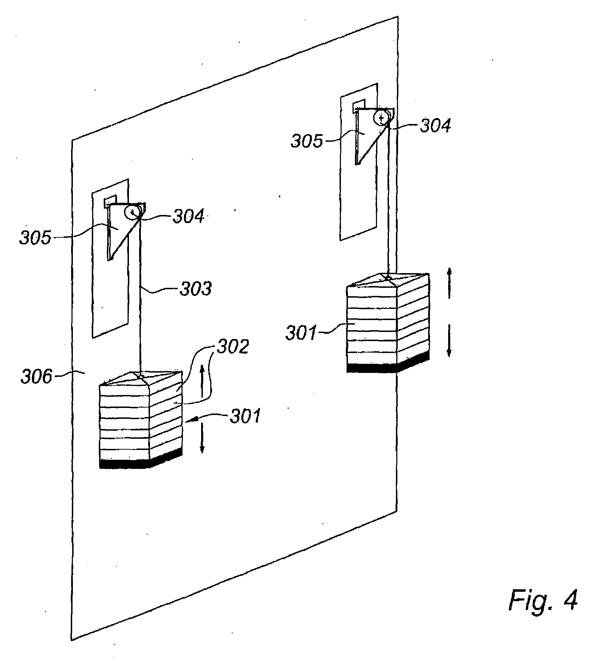

- la figure 4 est une vue en perspective de l'installation d'équilibrage à contrepoids et câbles,

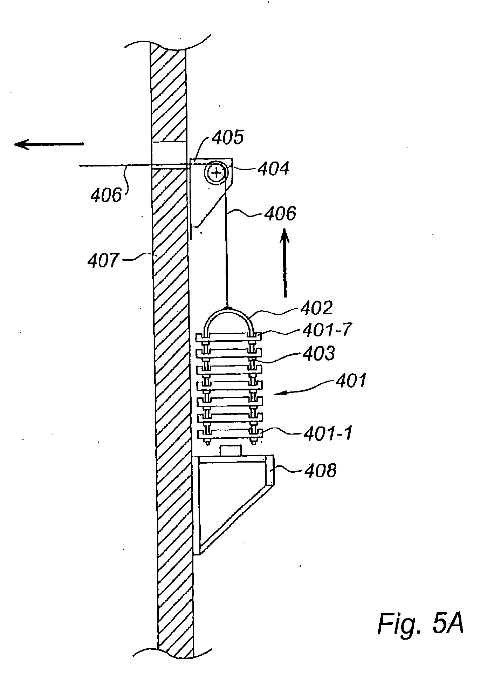

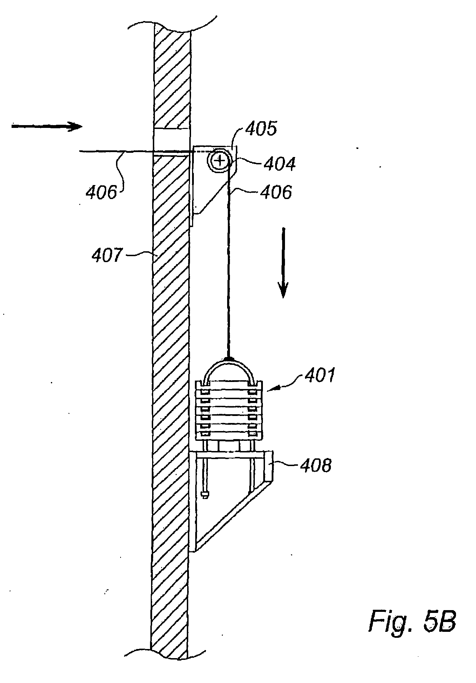

- les figures 5A, 5B montrent une autre variante de réalisation avec un contrepoids formé de masses élémentaires qui viennent s'appuyer successivement sur un support pour neutraliser le contrepoids dans une certaine position,

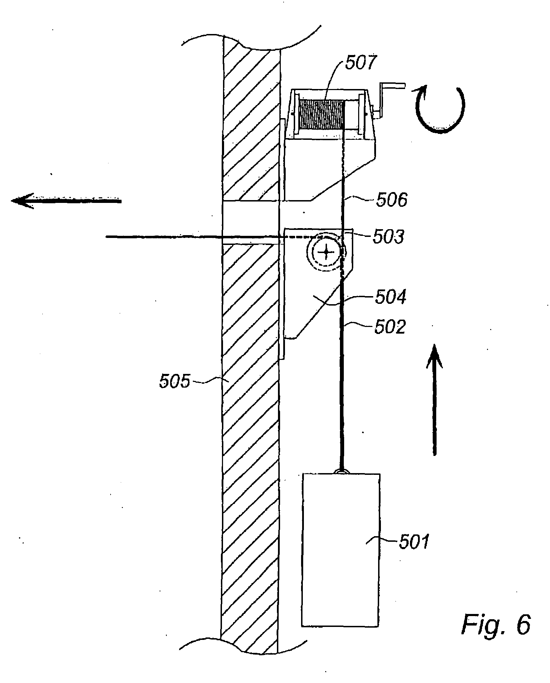

- la figure 6 montre un autre mode de réalisation du moyen d'équilibrage à contrepoids,

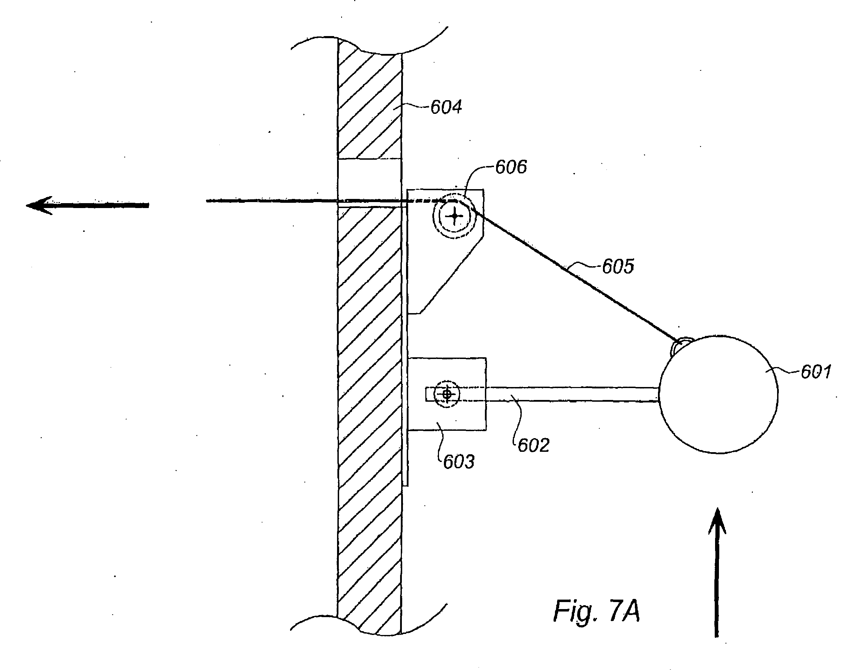

- la figure 7A montre une autre réalisation de l'installation à contrepoids,

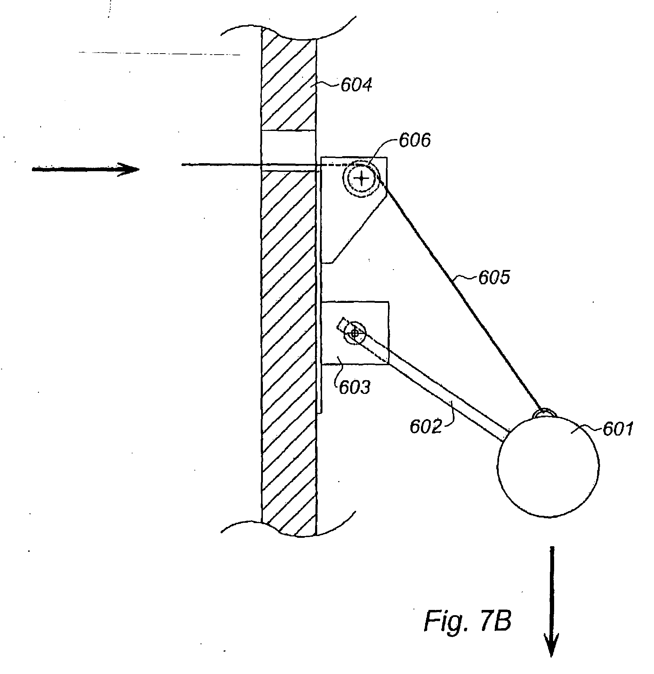

- la figure 7B montrent la position extrême du contrepoids de la figure 7A,

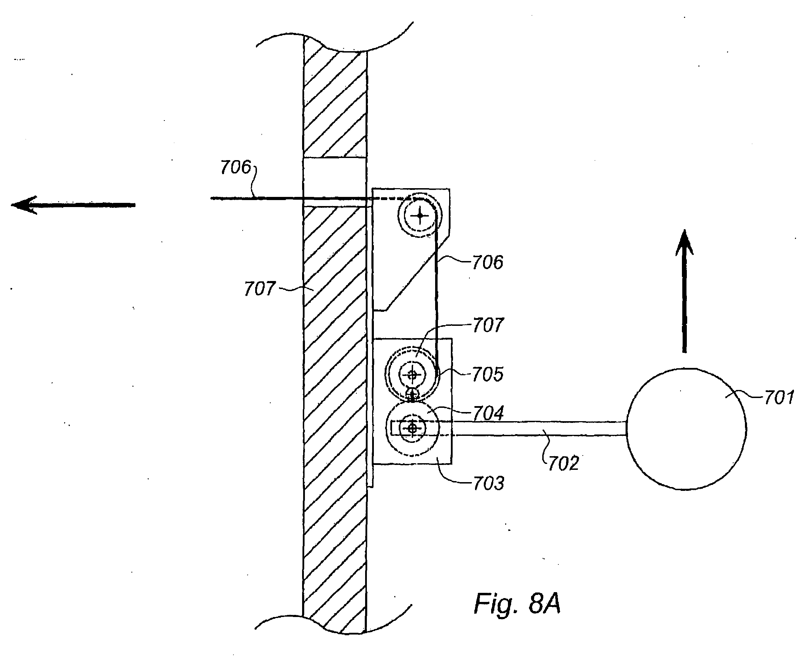

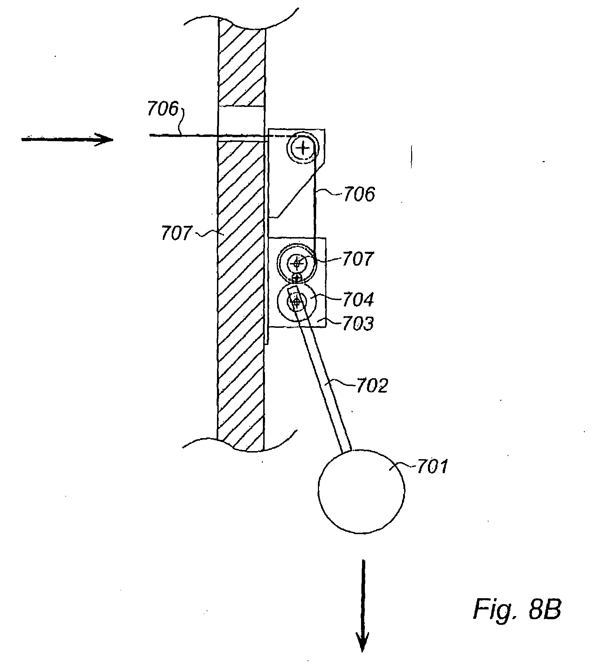

- les figures 8A, 8B montrent un autre mode de réalisation du montage du contrepoids sur un levier transmettant son mouvement par l'intermédiaire d'un pignon, respectivement en position haute et en position basse,

### Description de modes de réalisation

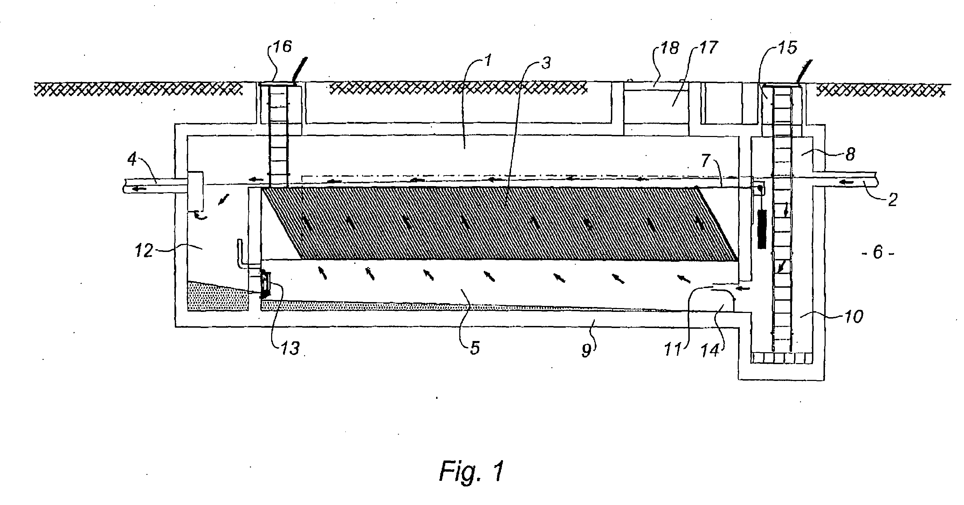

Selon le schéma général de la figure 1, l'invention concerne un décanteur lamellaire destiné au traitement d'un liquide chargé tel que des eaux de pluie ou des eaux usées pour retenir les particules en suspension ou entraînées par le liquide pour libérer une eau décantée, les particules s'accumulant au fond du décanteur sous la forme d'une couche de boue qui sera évacuée périodiquement.

Ce décanteur se compose d'une cuve 1, en général bétonnée et enterrée, mais pouvant également être préfabriquée par exemple en acier ou en polyester armé, comportant une entrée de liquide chargé 2. Ce liquide passe par un chemin de décantation formé par un ensemble de plaques maintenues espacées, en général parallèles. La circulation du liquide est matérialisée par des flèches. Au cours de ce cheminement, les particules en suspension dans le liquide tombent sous l'effet de leur poids et s'accrochent aux plaques 3, le liquide progressivement débarrassé de ces particules continuant son chemin jusqu'à la sortie 4. En position active, les plaques 3 sont inclinées, comme sur la figure 1, car leur surface utile correspond à leur projection verticale. Pour cette raison, les plaques 3 ont une certaine inclinaison. Mais cette inclinaison ne doit pas être trop importante car il faut que les particules agglutinées sur les plaques puissent s'en détacher naturellement pour tomber au fond 5 de la cuve 1, où elles forment des boues qui sont évacuées lors du nettoyage du décanteur.

Pour ce nettoyage il peut être intéressant de basculer les plaques 3 dans leur position verticale ou proche de la verticale de façon qu'en attaquant les plaques avec un jet d'eau, les résidus tombent plus facilement des plaques. De telles interventions se font périodiquement.

Selon l'invention, l'ensemble des plaques mobiles 3 est équilibré par un contrepoids 6 relié par exemple par un câble 7. Ce contrepoids 6 est de préférence installé dans le puits d'entrée 8 ou de sortie pour ne pas encombrer la cuve de décantation et gêner l'accès aux plaques 3 ou perturber l'écoulement du liquide à travers la cuve 1.

En effet, une condition importante d'une bonne décantation est la régularité de l'écoulement du liquide dans la cuve 1 et notamment entre les plaques 3.

La liaison entre l'ensemble des plaques et le contrepoids se fait de préférence par le câble 7. Une liaison mécanique par chaîne ou par tringle est également envisageable. Le contrepoids 6 est notamment formé de masses élémentaires, ce qui facilite sa mise en place au moment de l'installation du décanteur. Le contrepoids pourra alors être équilibré en fonction du nombre de plaques 3 constituant le chemin de décantation. Le contrepoids peut également être disposé à l'extrémité d'un bras de levier.

De manière générale, le chemin de décantation peut traverser l'ensemble des plaques soit en remontant par le dessous de la cuve 1 pour sortir par le haut (flèche F1) (décanteur à contre-courant) ou encore le flux de liquide chargé peut être introduit par le côté en un ou plusieurs endroits pour traverser horizontalement l'intervalle entre les plaques 3 et sortir dans les mêmes conditions de la cuve (flèche F2) (décanteur à flux croisés).

Le puits d'entrée 8 descend en dessous de la dalle 9 de la cuve 1 pour former une fosse de collecte de déchets grossiers 10. Cette fosse de collecte recueille les matières lourdes et qui tombent naturellement du liquide en entrée avant que celui-ci n'arrive dans la cuve proprement dite. L'entrée de la cuve est, par exemple, constituée par un système de buses 11 répartissant le jet de liquide sur toute la longueur de la cuve, pour attaquer aussi régulièrement que possible l'ensemble de plaques 3.

Cette cuve comporte également des moyens de nettoyage de la dalle 9. Cette dalle est en pente vers la fosse de collecte 10. En amont de la partie de la cuve contenant les plaques 3, il y a un réservoir de chasse 12 rempli de liquide décanté. Cette chasse d'eau débouche au-dessus de la dalle 9 par un clapet de chasse 13. Pour nettoyer la dalle une fois la cuve vidée, on ouvre le clapet de chasse qui balaie les résidus vers la fosse de collecte 10. A cet effet et sous la buse d'entrée 11, il est prévu un volet 14 qui retient normalement les boues à l'intérieur de la cuve au-dessus de la dalle 9 pendant le fonctionnement du décanteur pour éviter que les boues ne risquent de se mélanger à l'eau d'entrée. Ce n'est que pour nettoyer la cuve que celle-ci, envoie son flot de rinçage vers la fosse 10, le volet 14 étant alors ouvert.

En partie haute, la cuve comporte un accès 15 pour le puits d'entrée et un accès 16 pour la partie au-dessus des plaques 3.

Enfin, il est prévu une trémie d'accès 17 fermée par une dalle en béton 18. Cette trémie d'accès 17 est utilisée pour introduire le matériel dans la cuve au moment de la construction ou des travaux de réparation. Cette trémie d'accès 17 a, en particulier, une largeur suffisante pour l'introduction de plaques sous forme de groupes de plaques ou de plaques élémentaires.

Bien que non représentée, cette mise en place des plaques se fait très simplement ; dans le cas de la figure 1, on introduit les plaques sans les installer, à travers la trémie 17 en les positionnement les unes contre les autres autant que faire ce peut à gauche de la trémie puis, éventuellement, à droite. Ensuite, on, installe les plaques les unes à la suite des autres avec l'écartement voulu pour les mettre dans une disposition parallèle comme celle représentée en les reliant à leur extrémité supérieure pour constituer les parallélogrammes déformables sollicités par le câble 7 ou moyen de liaison et le contrepoids 6.

La figure 2 montre une vue en coupe longitudinale d'un décanteur lamellaire à flux croisés, c'est-à-dire dont la cuve 101 est équipée d'alimentations latérales d'un côté et sorties latérales de l'autre côté du liquide. Pour la description de cet exemple de réalisation, on utilisera les mêmes références qu'à la figure 1 pour désigner les éléments identiques ou analogues, ces références étant simplement augmentées de 100.

Le décanteur se compose d'une cuve 101 enfouie logeant un ensemble de plaques 103 formant le chemin de décantation. Cette cuve fonctionne selon le principe des flux croisés, c'est-à-dire que, contrairement à un décanteur à contre courant dans lequel le liquide remonte alors que les particules qui s'en séparent tombent, dans le cas d'un décanteur à flux croisé, le liquide non décanté arrive transversalement par rapport aux plaques et sort au-delà des plaques également transversalement. Cette cuve à flux croisés 101 comporte une alimentation et une sortie latérale, réparties, formées par des manchettes d'alimentation 102 et d'évacuation 104 réparties le long de la cuve, à une certaine hauteur. En aval de la cuve 101, il y a un puits 108 avec une trappe d'accès 115. Ce puits 108 comporte en partie basse une fosse 110 de collecte et d'évacuation des boues. Elle reçoit le contrepoids 106 d'équilibrage.

La cuve est munie d'une trémie d'accès pour l'introduction 117 du matériel, qui est normalement fermée par des dalles en béton 118. Elle comporte également une trappe d'accès 116 pour les interventions de nettoyage et d'inspection.

Cette cuve est également équipée de moyens de nettoyage de la dalle 109 qui, en pente, débouche dans la fosse 110 de collecte et d'évacuation des boues par un orifice fermé par un clapet anti-retour 114. Pour le rinçage de la dalle 109, en amont de la cuve de décantage 101, il y a un réservoir de chasse 112 qui est normalement rempli d'eau. Le réservoir est fermé par un clapet de chasse 113. Au moment du nettoyage de la dalle 109, pour en enlever les résidus, on ouvre le clapet de chasse 113 qui balaye ces résidus vers la fosse de collecte 110.

La figure 2bis est une vue en coupe transversale du décanteur de la figure 2. Cette vue en coupe montre les manchettes d'alimentation 102 et d'évacuation 104 ainsi que la disposition des plaques 103 installées sur des murets 120 portant des rails 121 recevant les axes des plaques 103. Cette figure montre également le clapet de chasse 113.

Des flèches indiquent la circulation du liquide entre les manchettes d'alimentation 102 et les manchettes d'évacuation 104. De part et d'autre des murets 120, il y a un couloir de service 122 permettant l'accès pour le nettoyage au jet.

Le nettoyage des couloirs de service 122 se fait avec un jet puisque son encombrement est moindre que la dalle 109 sous les plaques 103. Un clapet de chasse, auxiliaire, peut également être prévu pour chacun des deux couloirs 122.

Cette vue en coupe montre également le collecteur d'alimentation 130 et le collecteur de sortie 131 équipés chacun d'un accès 132, 133.

Les figures 3A, 3B montrent un mode de réalisation particulier d'un ensemble de plaques 203 formant un chemin de décantation. Ces plaques sont munies de pivots 240 sur leurs côtés. Selon cette réalisation, les pivots 240 sont installés en partie basse des plaques 203 constituées par un châssis 250 muni de raidisseurs longitudinaux 251, l'ensemble portant la surface de décantation 252 sur laquelle se déposent les particules.

Ces plaques sont articulées en partie basse dans des logements 262 réalisés dans deux rails latéraux 261 portés par un muret 260 de chaque côté délimitant le fond de la cuve de décantation. En partie haute, les plaques sont reliées par des biellettes 270 de façon à constituer en vue en coupe des parallélogrammes articulés.

Les logements ou réservations prévus dans les deux rails se correspondent de façon homologue d'un rail à l'autre pour recevoir chaque fois un pivot de plaque. Ces logements ou réservations sont, de préférence, des formes d'encoches ouvertes vers le haut dans lesquelles les pivots des plaques s'introduisent simplement par le haut. Toutefois, des réservations en forme de trous avec introduction latérale et coulissement sont également envisageables mais le mouvement de mise en place des pivots des plaques sera plus compliqué.

Ces réservations ou logements sont réparties, de préférence, suivant une répartition régulière et d'un pas ou intervalle inférieur au plus petit écartement de deux plaques voisines, cet écartement de référence étant celui des plaques en position verticale.

On pourra ainsi installer des plaques successives avec un écartement de un ou plusieurs intervalles en fonction de la nature du liquide à traiter, ou des performances attendues du décanteur, ou même en tenant compte des flux de liquide à travers le décanteur. Dans ce cas, l'écartement des plaques n'est pas identique dans tout le décanteur mais peut être modifié pour tenir compte des passages ou flux de liquide.

L'association des plaques en partie haute se fera avec le même intervalle que celui des pivots en partie basse pour que les ensembles de plaques soient mobiles comme des parallélogrammes articulés.

L'un ou certains groupes de plaques 203 sont reliés par un câble à un contrepoids d'équilibrage comme celui présenté à la figure 1.

La figure 3A montre les plaques 203 en position inclinée et la figure 3B, les plaques 203 en position verticale.

La position inclinée est la position de décantage puisque, comme déjà indiqué, les particules du liquide chargé descendent normalement sous l'effet de leur poids. Pour éviter qu'elles ne soient toujours en suspension dans le liquide, il faut qu'elles rencontrent aussi rapidement que possible la surface 252 d'une plaque 203. Or, comme le mouvement relatif des particules par rapport au liquide lui-même en mouvement est un mouvement vertical, la surface active des plaques correspond à leur projection verticale. Plus cette projection est grande, plus la surface active est grande avec toutefois la limitation indiquée ci-dessus, à savoir que l'inclinaison doit néanmoins être suffisante pour éviter une accumulation importante de particules sur les plaques qui ne s'en détacheraient plus sous l'effet du poids des lambeaux. Or, une épaisseur de matière accumulée sur les plaques réduirait la section de passage du liquide à décanter et par suite le rendement global du décanteur.

La figure 4 est une vue en perspective simplifiée de l'installation d'un contrepoids 301 en deux parties de chaque côté de l'ensemble des plaques non représentés. Le contrepoids 301 est formé par une masse ou un volume recevant des masses élémentaires 302. Ces masses sont accrochées par un câble 303 passant sur une poulie 304 portée par une potence 305 fixée à la paroi du puits 306.

Les figures 5A, 5B montrent une autre variante de réalisation de l'invention. Dans cette variante le contrepoids 401 est formé de contrepoids élémentaires 401-1..., 401-7, portés par un arceau 402 muni de butées 403. L'arceau 402 est relié au câble 406 qui passe sur une poulie 404 portée par une chape 405 reliée à la paroi 407.

Le contrepoids 401 peut venir sur une console 408 placée à une distance appropriée sous le contrepoids. Lorsque le contrepoids 503 descend, il dépose progressivement les différents poids élémentaires 401-407 si bien que la traction exercée sur le câble 406 diminue progressivement. Cette charge est à l'équilibre avec l'ensemble des plaques lorsqu'on se trouve dans la position représentée à la figure 5B.

Pour permettre cet empilage entassé, les plaques 401-1, 401-7 constituant le contrepoids 401 comportent par exemple des orifices qui vont en diminuant à partir de la plaque inférieure 401-1 jusqu'à la plaque supérieure 401-7 de façon à passer sur des butées 403 dont les dimensions correspondent de façon à retenir toujours la plaque au-dessus mais à laisser passer la ou les plaques en dessous pour arriver à l'empilage de la figure 5B.

La figure 6 montre une variante de réalisation avec un contrepoids 501 1 en une ou plusieurs parties reliées par un câble 502 passant sur une poulie 503 portée par une console 504 fixée à la paroi 505, l'autre extrémité du câble 502 étant reliée à l'ensemble des plaques non représentées.

Un second câble 506 est relié à un treuil 507 qui permet de commander l'inclinaison des plaques.

La figure 7A montre un autre mode de réalisation du contrepoids 601. Dans ce cas, le contrepoids, également divisé en deux parties, est porté par un bras 602 articulé sur une patte 603 fixée à la paroi 604 du puits. Le mouvement est transmis par un câble rattaché 605 au contrepoids 601 ou au bras par une extrémité, son autre extrémité étant reliée à l'ensemble des plaques.

Ce câble 605 passe sur une poulie 606 avant de rejoindre les plaques non représentées.

Les figures 7A, 7B montrent les deux positions extrêmes du contrepoids 601.

Les figures 8A, 8B montrent une autre variante de réalisation dans laquelle le contrepoids 701 est porté par un bras 702 articulé à une patte 703. Le bras 702 porte une roue dentée 704 engrenant avec une roue dentée 705 commandant un treuil 707 sur lequel s'enroule le câble 706 relié à l'ensemble des plaques non représentées. Ce câble 706 traverse la paroi 707.

La figure 8A montre la position du contrepoids lorsque l'ensemble des plaques est incliné et la figure 8B montre le contrepoids 701 ayant basculé et les plaques se trouvant alors en position verticale. Ces plaques ne sont pas représentées.

## Revendications

1. Décanteur lamellaire pour le traitement d'un liquide chargé, comprenant :
- une cuve (1) avec une entrée (2) de liquide chargé et une sortie (4) de liquide décanté, équipée d'un chemin de décantation formé d'un ensemble de plaques maintenues espacées entre lesquelles circule le liquide à décanter, ces plaques pouvant basculer entre deux positions extrêmes, l'une inclinée par rapport à la direction verticale et l'autre sensiblement verticale,
- les plaques (3, 103) portent chacune des pivots latéraux (240) et elles sont reliées deux à deux par une liaison articulée (270),
**caractérisé en ce que**
- un contrepoids est relié à l'ensemble des plaques (3) et la masse du contrepoids varie selon l'inclinaison des plaques en développant une traction proportionnelle à l'angle d'inclinaison des plaques,
- le contrepoids est porté par un bras de levier, le moment des forces des lamelles d'une part et du ou des contrepoids de l'autre venant l'équilibrer.

2. Décanteur lamellaire selon la revendication 1,
**caractérisé en ce que**
le contrepoids (6) est installé dans le puits d'entrée (8).

3. Décanteur lamellaire selon la revendication 1,
**caractérisé en ce qu'**
un contrepoids (301, 401, 501) est associé à chacun des deux côtés de l'ensemble des plaques (3, 103, 203).

4. Décanteur lamellaire selon la revendication 1,
**caractérisé en ce que**
la masse du contrepoids (6) équilibre l'ensemble des plaques (3) en position d'inclinaison extrême.

5. Décanteur lamellaire selon la revendication 1,
**caractérisé en ce que**
les pivots (240) des plaques (203) sont prévus en partie basse et la liaison articulée (270) entre les plaques (203) est prévue en partie haute des plaques.

6. Décantcur lamellaire selon la revendication 5,
**caractérisé en ce que**
les plaques sont reliées les unes aux autres par des biellettes démontables (270).

7. Décanteur lamellaire selon la revendication 6,
**caractérisé en ce qu'**
il comporte deux rails installés en partie basse munis de réservations réparties notamment à intervalles réguliers, inférieurs à la distance minimale entre deux plaques en position verticale, pour recevoir de manière réglable en écartement les plaques par leur pivot.

8. Décanteur lamellaire pour le traitement d'un liquide chargé, comprenant :
- une cuve (1) avec une entrée (2) de liquide chargé et une sortie (4) de liquide décanté, équipée d'un chemin de décantation formé d'un ensemble de plaques maintenues espacées entre lesquelles circule le liquide à décanter, ces plaques pouvant basculer entre deux positions extrêmes, l'une inclinée par rapport à la direction verticale et l'autre sensiblement verticale,
- les plaques (3, 103) portent chacune des pivots latéraux (240) et elles sont reliées deux à deux par une liaison articulée (270),
**caractérisé en ce que**
- un contrepoids est relié à l'ensemble des plaques (3) et la masse du contrepoids varie selon l'inclinaison des plaques en développant une traction proportionnelle à l'angle d'inclinaison des plaques,
- le contrepoids (6) est formé de masses élémentaires reliées les unes aux autres par un câble, une chaîne ou une articulation, l'ensemble venant reposer sur un siège et lorsque les lames basculent en position inclinée, le contrepoids se déplie et la totalité des masses compensent la tension qui s'exerce sur le câble de liaison et lorsque les lames reviennent vers la position verticale, les masses viennent reposer les unes après les autres sur le siège, réduisant ainsi progressivement la masse du contrepoids.

## Claims

1. Lamellar settling system for treating a laden liquid, comprising:
- a tank (1) with an inlet (2) for laden liquid and an outlet (4) for decanted liquid, equipped with a settling path formed by a set of plates retained at a distance apart from one another, between which the liquid to be decanted circulates, these plates can be pivoted between two extreme positions, one inclined with respect to the vertical direction and the other substantially vertical,
- the plates (3, 103) each bear lateral pivots (240) and are linked in pairs by an articulated link (270),
**characterised in that**
- a counterweight is linked to the set of plates (3) and the weight of the counterweight varies depending on the inclination of the plates, generating a traction proportional to the angle of inclination of the plates,
- the counterweight is borne by a lever arm which is counterbalanced by the moment of the forces of the plates on the one hand and of the counterweight or counterweights on the other hand.

2. Lamellar settling system as claimed in claim 1,
**characterised in that**
the counterweight (6) is installed in the inlet shaft (8) .

3. Lamellar settling system as claimed in claim 1,
**characterised in that**
a counterweight (301, 401, 501) co-operates with each of the two sides of the set of plates (3, 103, 203).

4. Lamellar settling system as claimed in claim 1,
**characterised in that**
the weight of the counterweight (6) counterbalances the set of plates (3) in the extreme position of inclination.

5. Lamellar settling system as claimed in claim 1,
**characterised in that**
the pivots (240) of the plates (203) are disposed at the bottom part and the articulated link (270) between the plates (203) is disposed at the top part of the plates.

6. Lamellar settling system as claimed in claim 5,
**characterised in that**
the plates are linked to one another by detachable rod linkages (270).

7. Lamellar settling system as claimed in claim 6,
**characterised in that**
it has two rails installed at the bottom part provided with mounts, in particular distributed at regular intervals shorter than the minimum distance between two plates in the vertical position, in order to accommodate the plates by their pivot so that they can be controlled in terms of their spacing.

8. Lamellar settling system for treating a laden liquid, comprising:
- a tank (1) with an inlet (2) for laden liquid and an outlet (4) for decanted liquid, equipped with a settling path formed by a set of plates retained at a distance apart from one another, between which the liquid to be decanted circulates, these plates can be pivoted between two extreme positions, one inclined with respect to the vertical direction and the other substantially vertical,
- the plates (3, 103) each bear lateral pivots (240) and are linked in pairs by an articulated link (270),
**characterised in that**
- a counterweight is linked to the set of plates (3) and the weight of the counterweight varies depending on the inclination of the plates, generating a traction proportional to the angle of inclination of the plates,
- the counterweight (6) is formed by individual weights linked to one another by a cable, a chain or an articulation and the unit is positioned so that it lies on a seat, and as the plates pivot into the inclined position, the counterweight unfolds and the weights as a whole compensate the tension exerted on the linking cable, and as the plates are returned to their vertical position, the weights are moved one after the other so that they lie on the seat, thereby gradually reducing the weight of the counterweight.

## Patentansprüche

1. Lamellenabscheider zur Behandlung einer beladenen Flüssigkeit, umfassend:
- einen Behälter (1) mit einer Eintrittsöffnung (2) für eine beladene Flüssigkeit und eine Austrittsöffnung (4) für eine dekantierte Flüssigkeit, ausgestattet mit einer Abscheidestrecke, die aus einer Gesamtheit von Platten gebildet ist, welche in einem Abstand zueinander gehalten werden und zwischen welchen die zu dekantierende Flüssigkeit strömt, wobei diese Platten zwischen zwei äußersten Stellungen gekippt werden können, wobei die eine bezogen auf die senkrechte Richtung geneigt ist und die andere im Wesentlichen senkrecht ist,
- jede der Platten (3, 103) ist mit seitlichen Zapfen (240) versehen, und sie sind paarweise durch eine Gelenkverbindung (270) verbunden,
**dadurch gekennzeichnet, dass**
- ein Gegengewicht mit der Gesamtheit der Platten (3) verbunden ist und die Masse des Gegengewichts in Abhängigkeit von der Neigung der Platten variiert, wobei eine Zugkraft entwickelt wird, die proportional zum Neigungswinkel der Platten ist,
- das Gegengewicht von einem Hebelarm getragen wird, wobei dieser vom Moment der Kräfte einerseits der Lamellen und andererseits des oder der Gegengewicht(e) im Gleichgewicht gehalten wird.

2. Lamellenabscheider nach Anspruch 1,
**dadurch gekennzeichnet, dass**
das Gegengewicht (6) im Eintrittsschacht (8) angeordnet ist.

3. Lamellenabscheider nach Anspruch 1,
**dadurch gekennzeichnet, dass**
jeder der beiden Seiten der Gesamtheit der Platten (3, 103, 203) ein Gegengewicht (301, 401, 501) zugeordnet ist.

4. Lamellenabscheider nach Anspruch 1,
**dadurch gekennzeichnet, dass**
die Masse des Gegengewichts (6) die Gesamtheit der Platten (3) in der äußersten Neigungsstellung ins Gleichgewicht bringt.

5. Lamellenabscheider nach Anspruch 1,
**dadurch gekennzeichnet, dass**
die Zapfen (240) der Platten (203) im unteren Abschnitt vorgesehen sind und die Gelenkverbindung (270) zwischen den Platten (203) im oberen Abschnitt der Platten vorgesehen ist.

6. Lamellenabscheider nach Anspruch 5,
**dadurch gekennzeichnet, dass**
die Platten untereinander durch demontierbare Stangen (270) verbunden sind.

7. Lamellenabscheider nach Anspruch 6,
**dadurch gekennzeichnet, dass**
er zwei Schienen aufweist, die im unteren Abschnitt angeordnet und mit Aussparungen versehen sind, die insbesondere in regelmäßigen Abständen angeordnet sind, welche geringer als der Mindestabstand zwischen zwei Platten in senkrechter Stellung sind, um die Platten über ihren Zapfen derart aufzunehmen, dass der Abstand der Platten einstellbar ist.

8. Lamellenabscheider zur Behandlung einer beladenen Flüssigkeit, umfassend:
- einen Behälter (1) mit einer Eintrittsöffnung (2) für eine beladene Flüssigkeit und eine Austrittsöffnung (4) für eine dekantierte Flüssigkeit, ausgestattet mit einer Abscheidestrecke, die aus einer Gesamtheit von Platten gebildet ist, welche in einem Abstand zueinander gehalten werden und zwischen welchen die zu dekantierende Flüssigkeit strömt, wobei diese Platten zwischen zwei äußersten Stellungen gekippt werden können, wobei die eine bezogen auf die senkrechte Richtung geneigt ist und die andere im Wesentlichen senkrecht ist,
- jede der Platten (3, 103) ist mit seitlichen Zapfen (240) versehen, und sie sind paarweise durch eine Gelenkverbindung (270) verbunden,
**dadurch gekennzeichnet, dass**
- ein Gegengewicht mit der Gesamtheit der Platten (3) verbunden ist und die Masse des Gegengewichts in Abhängigkeit von der Neigung der Platten variiert, wobei eine Zugkraft entwickelt wird, die proportional zum Neigungswinkel der Platten ist,
- das Gegengewicht (6) aus Einzelmassen gebildet ist, die untereinander mit einem Kabel, einer Kette oder einem Gelenk verbunden sind, wobei die Gesamtheit auf einer Unterlage zur Ruhe kommt und wobei, wenn die Blätter in die geneigte Stellung kippen, das Gegengewicht sich entfaltet und die Gesamtheit der Massen die Spannung, welche auf das Verbindungskabel ausgeübt wird, ausgleicht und wobei, wenn die Blätter in die senkrechte Stellung zurückkehren, die Massen eine nach der anderen auf der Unterlage zur Ruhe kommen, wodurch die Masse des Gegengewichts schrittweise verringert wird.
